# EUROPEAN PATENT APPLICATION

(11) **EP 0 962 142 A2**
(43) Date of publication of application: **08.12.1999**
(21) Application number: 99101686.6
(22) Date of filing: 08.02.1999
(51) Int. Cl.: A21C 13/02, A21C 9/08

(54) **Apparatus for feeding machines for making bread or the like**

(30) Priority: 12.02.1998 IT PD980028
(71) Applicant: C.I.M. S.r.l., I-35035 Mestrino (Padova) (IT)
(72) Inventor: Bordin, Italo, 35010 Cadoneghe (Padova) (IT)
(74) Representative: Modiano, Guido, Dr.-Ing.

(57) **Abstract**

An apparatus for feeding machines for making bread or the like, comprising a plurality of flexible-element conveyors (16,19,20,22,23) with different transfer speeds, so as to stretch a continuous piece of dough (13) without rolling. The conveyors pass through a controlled-atmosphere chamber (25) in which rising occurs.

## Description

The present invention relates to an apparatus for feeding machines for making bread or the like.

It is known that plants for making bread or flour-based products in general with a high level of automation are increasingly widespread owing to ever-increasing market demand.

In particular, since the market mostly requires bread of the type known in Italian as "ciabatta" or the like, these plants are preset for producing this type of flour-based product.

Such plants currently substantially include one or more kneading machines which produce dough with a high moisture content, which is then introduced in a machine for making loaves of bread, which in turn transfers at the output the loaves, which have been formed and placed within baking pans, into the oven.

Conventional bread-making machines currently have a feeder section in which pieces of dough weighing 10-15 kg are prepared and accommodated in suitable baking-pans, in which they are left to rise.

Once rising has ended, the pieces are introduced in a section of the machine where they are joined to each other, are trimmed to even out the edges (with a considerable waste of dough which must be optionally recirculated), and are then subjected to rolling, which is known to spoil the organoleptic structure of the dough.

These machines usually do not yield a satisfactory product, since as mentioned the rolling operation spoils the internal structures of the dough, degrading them significantly before the dough is placed in the oven.

These machines further have a discontinuous feed and are accordingly also unable to achieve particularly high production levels.

Moreover, in order to operate the plant adequately it is always necessary to provide temporary storage areas for the baking-pans bearing pieces in various stages of their rising.

In order to obviate the various problems, mostly related to production, machines have been provided which have a continuous feed in which at the output of the kneading machine the dough is introduced, after passing through extruders, in a feeder section which it then leaves after being cut into loaves to undergo rising and then baking.

However, both extrusion and rolling produce high levels of structural degradation in the dough and therefore the product is once again usually of poor quality.

The aim of the present invention is to provide an apparatus for machines for making bread or the like which solves the above-mentioned drawbacks of conventional machines, particularly by combining a continuous feeding of the dough into the machine with the production of loaves which are ready to be placed in the oven and in which the dough does not suffer any structural degradation due to rolling or similar operations.

Within the scope of this aim, an object of the present invention is to provide an apparatus which is suitable to cooperate in the production of high-quality loaves, at the same time achieving considerable savings in production costs and simplifying production cycles.

Another object of the present invention is to provide an apparatus which can optionally be included in already-operating production lines.

Another object of the present invention is to provide an apparatus whose purchase and running costs are both competitive.

Another object of the present invention is to provide an apparatus which can be manufactured with easily available equipment and components.

This aim, these objects and others which will become apparent hereinafter are achieved by an apparatus for feeding machines for making bread or the like, characterized in that it comprises a plurality of flexible-element conveyors with different transfer speeds, so as to stretch a continuous piece of dough without rolling, said conveyors passing through a controlled-atmosphere chamber in which rising occurs.

Further characteristics and advantages of the present invention will become apparent from the following detailed description of an embodiment thereof, illustrated only by way of non-limitative example in the accompanying drawings, wherein:
Figure 1 is a side elevation view of a machine according to the invention;
Figure 2 is a plan view of the machine according to the invention shown in Figure 1;
Figure 3 is an elevation view of the machine shown in Figure 1.

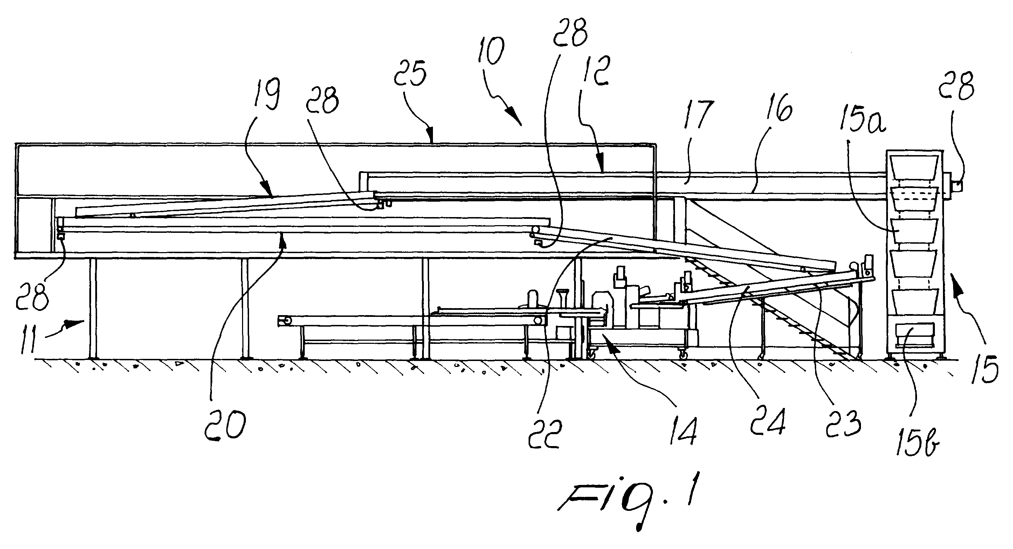

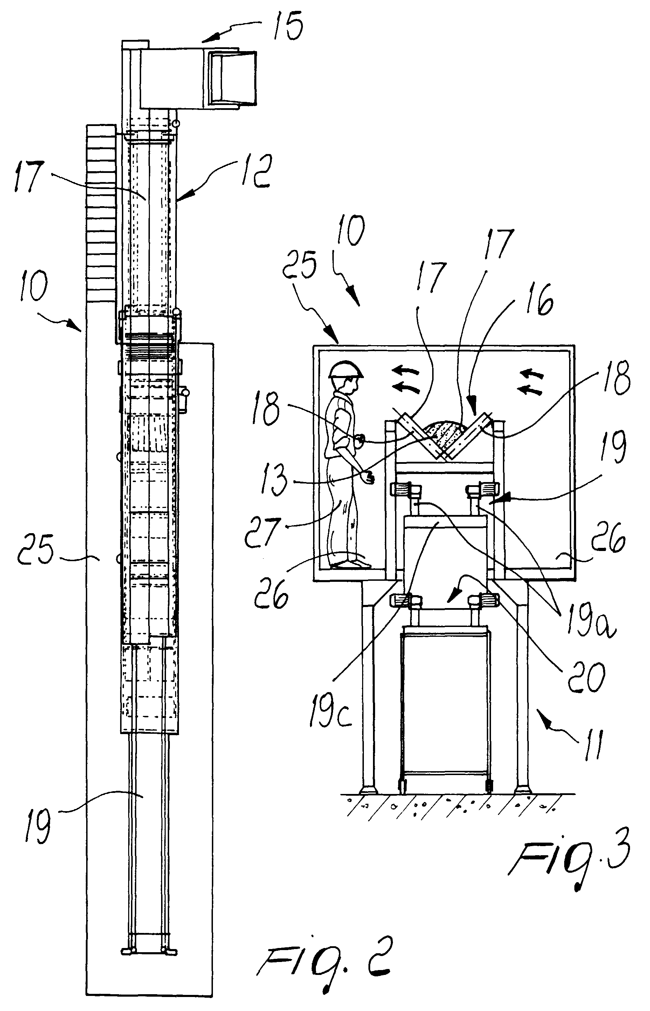

With particular reference to Figures 1 to 3, a machine for making bread of the type known in Italian as "ciabatta" or the like is generally designated by the reference numeral 10.

The machine 10 is combined in an upstream position, on supporting structures generally designated by the reference numeral 11, with a feeder system, generally designated by the reference numeral 12, for the dough 13 with a high moisture content from a kneading machine which is not shown for the sake of simplicity.

The machine 10, in a per se known manner, comprises a section for cutting, sizing and panning, generally designated by the reference numeral 14, from which the loaves are then placed in a baking oven, also not shown.

The feeder system 12 is of the continuous type and is constituted by a plurality of belt conveyors which are arranged in series (these conveyors are described in greater detail hereinafter) and have different transfer speeds, so as to stretch the dough 13 without rolling it before it is fed into the section 14.

In particular, in this case there are five belt conveyors whose transfer speeds increase starting from the belt that is closest to the point where the kneading machine feeds the dough 13 to the belt that is adjacent to the section 14.

Moreover, the belt conveyors are arranged so as to form a cascading path with overlapping portions so as to contain overall bulk.

In order to feed the belt conveyors there are dough lifting means, for example of the type with cups or trays 15a with a chain drive, generally designated by the reference numeral 15. The lifting means 15 are located downstream of a star-type cropping unit 15b, known per se and not shown and is in turn fed by the kneading machine.

The lifting means 15 end at the input of a first one of the belt conveyors, which is designated by the reference numeral 16.

In particular, the first belt conveyor 16 lies substantially along a horizontal directrix and is provided with a double belt 17 arranged in a V-shaped configuration with an internal angle, in this case, of 45 sexagesimal degrees which is supported by corresponding series of rollers 18 and in which the lower edges of the belts overlap so as to provide a seal.

The arrangement of the belts 17 accordingly forms a sort of hollow in which the dispersion of material is considerably limited.

The feeder system 12 also comprises a second conveyor 19 which is inclined downward, is arranged in a cascading configuration so as to follow the first conveyor belt 16 and has a matching advancement direction.

In particular, the second conveyor 19, whose length is adjustable, comprises three belts, designated by the reference numerals 19a, 19b and 19c respectively; the first two belts are vertical and the third belt is horizontal, so as to form a channel.

The feeder system 12 also comprises a third belt conveyor 20 which is arranged after the second belt conveyor 19 in a cascading configuration, travels in the opposite direction and has the same structure.

A fourth belt 22 is also provided which is arranged after the third conveyor 2 in a cascading configuration and travels in the same direction.

In particular, the fourth conveyor 22 is inclined, flat and adjustable in length.

In the system 12 there is also a fifth belt conveyor 23 which is arranged after said fourth conveyor 22 in a cascading configuration and travels in the opposite direction.

The fifth conveyor 23 too is provided with three belts so as to form a channel.

In particular, a portion of the first conveyor 16, the second conveyor 19, the third conveyor 20 and a portion of the fourth conveyor 22 are arranged within a rising chamber 25 of the thermally insulated tunnel type with a controlled atmosphere (controlled temperature and humidity), provided with two lateral gangways 26 for the passage of the operators, designated by the reference numeral 27.

In particular, at least one and preferably each one of the conveyors 16, 19, 20, 22 and 23 is provided with corresponding edible oil dispensers, designated by the reference numeral 28, not all of which are shown.

In particular, the edible oil distributed on the surface of the conveyor belts allows to prevent the dough 13 from sticking to the belts.

In practice, operation is as follows: the dough is introduced in the feeder system 12 (with a water content of approximately 80%), in which the various belt conveyors are mutually synchronized with speeds which provide two basic conditions.

A first condition is that the dough 13 remains in the rising chamber 25 for a preset time (total rising time).

This condition can be achieved by appropriately setting the speeds of the various conveyors.

The second condition is that the dough is stretched in passing from one conveyor to the next.

This second condition is achieved by increasing the relative speeds of adjacent conveyors (by way of example, from a few tenths to 1-2 m/min).

Accordingly, the dough 13 reaches the cutting, sizing and panning section 14 in a condition in which it can be placed immediately in the oven.

The dough 13 that leaves the feeder system 12 has not only undergone an ideal rising process but has also undergone a stretching action which however does not produce the typical structural damage of rolling.

The dough is then fed into the cutting section after it has risen (usually it almost doubles its volume, losing 50% of its weight) and ready to be prepared in loaves.

In practice it has been observed that the present invention has achieved the intended aim and objects.

In particular, it should be noted that the apparatus according to the invention combines the possibility of providing production with continuous feeding of the loaves, avoiding damaging treatments such as rolling, which as mentioned induces degradation of the structure of the dough.

The apparatus according to the invention in fact applies a sort of stretching to the dough as a function of the relative speeds of the successive conveyors.

This stretching never entails the degradation of the structure of the dough, which can be already prepared in terms of rising and internal structure when it is introduced in the cutting section.

It is also noted that the apparatus solves the above problems without entailing particularly demanding constructive complications and this allows to produce it with low costs which are competitive with respect to the prior art.

It should also be noted that by virtue of its structure the apparatus according to the invention can also be combined with operating and already-installed plants.

In addition, the apparatus according to the invention can be optionally adapted to other types of similar bread.

The present invention is susceptible of numerous modifications and variations, all of which are within the scope of the inventive concept.

The constructive details may be replaced with other technically equivalent elements.

The materials and the dimensions may be any according to requirements.

The disclosures in Italian Patent Application No. PD98A000028 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for feeding machines for making bread or the like, characterized in that it comprises a plurality of flexible-element conveyors with different transfer speeds, so as to stretch a continuous piece of dough without rolling, said conveyors passing through a controlled-atmosphere chamber in which rising occurs.

2. The apparatus according to claim 1, characterized in that said rising chamber is constituted by a thermally insulated tunnel.

3. The apparatus according to claim 1, characterized in that said belt conveyors have transfer speeds which increase starting from the belt lying closest to an entry point of the dough downstream of a kneading machine, up to the belt that is adjacent to a machine section for sizing, cutting and panning.

4. The apparatus according to claim 1, characterized in that it comprises edible oil dispensers which are directed onto at least one of the belt conveyors and are suitable to spread oil on said conveyors, preventing the dough from sticking.

5. The apparatus according to claim 1, characterized in that said belt conveyors are arranged so as to form a cascading path with overlapping portions.

6. The apparatus according to claim 1, characterized in that it comprises five belt conveyors.

7. The apparatus according to claim 1, characterized in that it comprises a first belt conveyor which is partially external to said controlled rising cell.

8. The apparatus according to claim 7, characterized in that said first conveyor is of the type with two belts arranged in a V-shaped configuration, with an internal angle of 45° and overlapping lower belt edges.

9. The apparatus according to claim 7, characterized in that it comprises a second belt conveyor which is inclined downward, is arranged after said first conveyor in a cascading configuration and travels in the same direction.

10. The apparatus according to claim 9, characterized in that the length of said second conveyor is adjustable.

11. The apparatus according to claim 9, characterized in that it comprises a third belt conveyor which is arranged after said second conveyor in a cascading configuration and with an opposite advancement direction.

12. The apparatus according to claim 11, characterized in that it comprises a fourth belt conveyor which is arranged after said third conveyor in a cascading configuration and with the same advancement direction.

13. The apparatus according to claim 12, characterized in that the length of said fourth conveyor is adjustable.

14. The apparatus according to claim 12, characterized in that it comprises a fifth belt conveyor which is arranged after said fourth conveyor in a cascading configuration and with an opposite advancement direction.

15. The apparatus according to one or more of claims 9 to 14, characterized in that said conveyors comprise three belts, two vertical ones and a horizontal one, so as to form a channel.

16. The apparatus according to one or more of the preceding claims, characterized in that it comprises means of the cup or tray type with a chain drive for lifting the dough from a cropping unit up to said first conveyor.
